# EUROPEAN PATENT APPLICATION

(11) **EP 4 305 948 A1**
(43) Date of publication of application: **17.01.2024**
(21) Application number: 23179982.6
(22) Date of filing: 19.06.2023
(51) Int. Cl.: A01D 43/08, A01D 43/10, A01D 69/06, F16H 7/02

(54) **IMPROVEMENTS IN A FORAGE HARVESTER**

(30) Priority: 13.07.2022 GB 202210283
(71) Applicant: AGCO International GmbH, 8212 Neuhausen am Rheinfall (CH)
(72) Inventor: DREER, Constantin, 87616 Marktoberdorf (DE)
(74) Representative: AGCO Intellectual Property Department

(57) **Abstract**

A forage harvester comprising a frame and a drive assembly is disclosed. The drive assembly comprises a drive pulley, a tension pulley, a plurality of additional pulleys and a drive belt for drivingly connecting the pulleys, a tensioning cylinder located between a first portion of the frame and a support element for the tension pulley. The frame is provided with a mounting at a second portion of the frame and the support element for the tension pulley is located between the mounting at a first end of the support element and the tensioning cylinder at a second end of the support element.

## Description

### FIELD OF THE INVENTION

The present invention relates to a forage harvester and in particular to a drive arrangement for a cracker unit of a forage harvester.

### BACKGROUND

It is known to provide forage harvesters with a cracker unit. The cracker unit includes opposing cracker rollers through which harvested crop is fed. The harvested crop is fed though a chopper unit and into the cracker unit where it is squeezed and crushed between the cracker rollers before being fed to a discharge spout. A drive arrangement is provided to one side of the cracker rollers. The drive arrangement includes a drive pulley and other pulleys driven from the drive pulley, including pulleys associated with the first and second cracker rollers, by way of an endless belt extending around the pulleys.

From time to time an operator of the forage harvester may wish to change the selection of cracker rollers used in the cracker unit. This involves removing the unit from the forage harvester and replacing at least one of the cracker rollers. When replacing the cracker unit, the drive belt must also be reconnected around the ends of the cracker rollers. However, the drive belt previously used is no longer suited for driving the new arrangement, since the path to be taken by the drive belt is of differing length to that of the previous arrangement.

One solution is to provide separate mounting points in the cracker unit housing for cracker rollers of different diameter to ensure that the path of the drive belt in each instance is at least substantially similar, if not identical. However, this increases the cost of manufacture. In addition, it increases the difficulty for the operator when replacing the cracker roller(s) as the operator must ensure that each replacement cracker roller is mounted in the correct position and that the drive belt is correctly tensioned.

One solution is the use of a tensioning cylinder to adjust the position of a tension pulley in order to accommodate the changed drive belt path. However, the use of such a tensioning pulley system is not without its own problems.

In particular it is desirable that all of the pulleys are aligned in single plane to ensure that the endless belt runs smoothly and so maximum force transmission from the drive pulley to the other pulleys is obtained. In the case of an endless belt having V-shaped grooves (for engagement with matching grooves on the pulleys) misalignment may cause unnecessary wear on the belt increasing the chances of the belt having reduced force transmission over the life of the belt. Thus, while a degree of misalignment may be manageable it is desirable that this is kept to minimum or eliminated if possible.

It is an advantage of the present invention that problems associated with the use of such a tensioning pulley system are addressed. Similar problems exist in other drive systems of a forage harvester in which a tensioning pulley system is used.

### SUMMARY OF THE INVENTION

According to the present invention, a forage harvester comprises a frame and a drive assembly comprising a drive pulley, a tension pulley, a plurality of additional pulleys and a drive belt for drivingly connecting the pulleys, a tensioning cylinder located between a first portion of the frame and a support element for the tension pulley, the frame being provided with a mounting at a second portion of the frame and the support element for the tension pulley being located between the mounting at a first end of the support element and the tensioning cylinder at a second end of the support element, characterised in that the mounting comprises first and second elements, the first element fixedly secured to the frame and the second element releasably secured to and displaceable with respect to the first element.

Preferably, the second element provides three abutment surfaces by which its position in relation to the first element may be adjusted.

Preferably, two of the three abutment surfaces are spaced at 90 degrees to the third abutment surface.

Preferably, the first element further comprises a substantially rectangular body part from which extend first, second, third and fourth flanges, the first flange being provided with the axle mounting, the second, third and fourth flanges extending at least in part orthogonally from the substantially rectangular body part, the orthogonally extending portions of the second, third and fourth flanges each being provided with an opening and a window located between the substantially rectangular body part and the fourth flange.

Preferably, the second element further comprises a substantially rectangular body part from which extend first, second, third and fourth flanges, the first flange being provided with the axle mounting, the second, third and fourth flanges extending at least in part orthogonally from the substantially rectangular body part to provide each of the three abutment surfaces.

Preferably, the mounting further comprises adjustable fasteners extending though the openings in the first element and abutting the abutment surfaces of the second element.

Preferably, the second element provides first and second adjustment apparatus by which its position in relation to the frame may be adjusted.

Preferably, the first and second adjustment apparatus are oriented at 90 degrees to one another.

Preferably, the frame further comprises first and second flanges extending outwardly to the sides of the second element, the first and second flanges being oriented at 90 degrees to one another, each of the first and second flanges being provided with an opening.

More preferably, the second element further comprises a substantially rectangular body part provided with the first and second adjustment apparatus, the first and second adjustment apparatus incorporating respective first and second threaded openings oriented at 90 degrees to one another.

Preferably, the mounting further comprises adjustable fasteners extending though the openings in the frame and received within the threaded openings of the second element.

Preferably, the mounting at the second portion of the frame comprises first and second end mountings supporting an axle extending through the first end of the support element. More preferably, the first end mounting is fixed in relation to the frame.

Preferably, the second end mounting is adjustable horizontally and vertically with respect to the frame

Preferably, the support element comprises a clevis for supporting the tension pulley adjacent an end of the tensioning cylinder remote from the first portion of the frame.

Preferably, the forage harvester further comprises a cracker roller assembly and the drive assembly is adapted for driving of the cracker roller assembly.

Preferably the forage harvester further comprises a chopper drum and the drive assembly is adapted for driving of the chopper drum.

Within the scope of this application, it should be understood that the various aspects, embodiments, examples and alternatives set out herein, and individual features thereof may be taken independently or in any possible and compatible combination. Where features are described with reference to a single aspect or embodiment, it should be understood that such features are applicable to all aspects and embodiments unless otherwise stated or where such features are incompatible.

### BRIEF DESCRIPTION OF THE DRAWINGS

The invention will now be described, by way of example only, with reference to the accompanying drawings, in which:
Figure 1 shows a schematic side view of a forage harvester;
Figure 2 shows a schematic side view of elements of a prior art arrangement of a drive means of a forage harvester to drive cracker rollers of equal diameter;
Figure 3 shows a schematic side view of elements of a prior art arrangement of drive means of a forage harvester to drive cracker rollers of unequal diameter;
Figure 4 shows a schematic side view of the elements of Figure 3 illustrating a necessary adjustment in accordance with the present invention;
Figure 5 shows an isometric view of a cracker unit and the drive arrangement for the cracker unit in accordance with the present invention in position on a frame of a forage harvester;
Figure 6 shows an isometric view from a first side of elements of the drive arrangement in accordance with the present invention;
Figure 7 shows an isometric view a support element in accordance with the present invention;
Figure 8 shows a side view of the support element shown in Figure 7;
Figure 9 shows a sectional view of the support element shown in Figures 7 and 8;
Figure 10 shows a sectional view of a lower part of the support element shown in Figures 8 and 9;
Figure 11 shows a perspective view of a tensioning cylinder for use in the present invention;
Figure 12 shows a perspective view from a first direction of a support bracket for use in the present invention;
Figure 13 shows a perspective view from a second direction of the support bracket of Figure 12;
Figure 14 shows a first sectional view through the support bracket of Figure 12;
Figure 15 shows a second section through the support bracket of Figure 12;
Figure 16 shows a perspective view of a drive system for the ??? of a forage harvester; and
Figure 17 shows a detail of the mounting for the tensioning cylinder of the drive system shown in Figure 16.

### DETAILED DESCRIPTION OF SPECIFIC EMBODIMENTS OF THE INVENTION

The invention will now be described in the following detailed description with reference to the drawings, wherein preferred embodiments are described in detail to enable practice of the invention. Although the invention is described with reference to these specific preferred embodiments, it will be understood that the invention is not limited to these preferred embodiments. But to the contrary, the invention includes numerous alternatives, modifications and equivalents as will become apparent from consideration of the following detailed description.

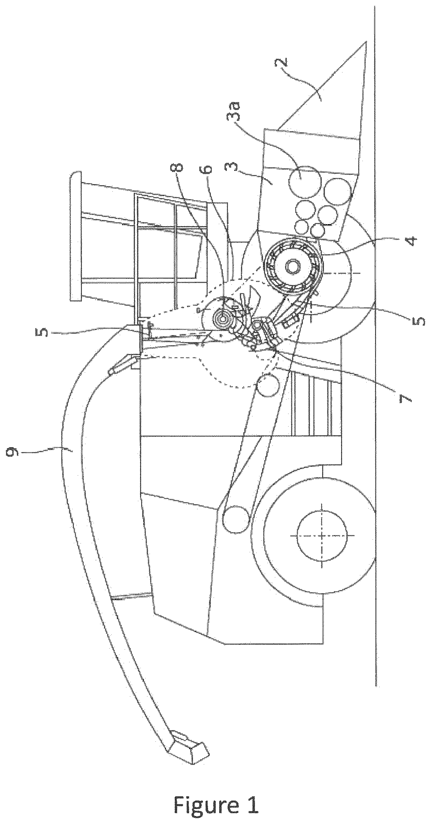

Figure 1 shows a forage harvester provided with a front attachment 2 such as a header which contains cutting equipment for cutting and harvesting a crop. The cut crop is fed through a series of compression rolls 3a in a compression roller housing 3 to a chopper drum 4 where the crop is chopped into smaller pieces. The chopped crop passes through a duct 5 and is optionally directed into a cracker unit 6 where the crop is further crushed and threshed. The harvested crop is then blown upwards along a duct 5 by an accelerator 8 and exits through a spout 9.

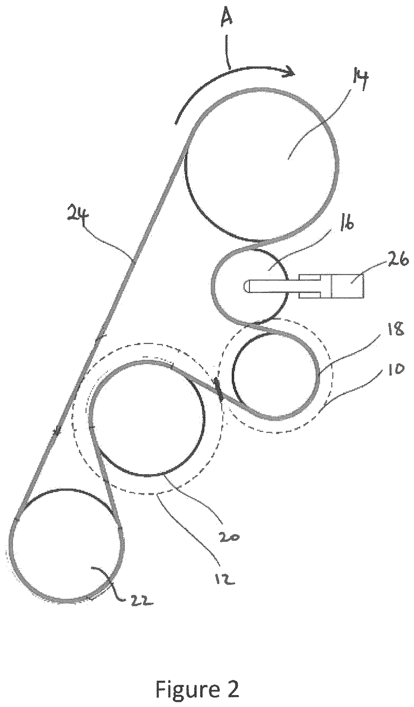

With reference to Figure 2, a schematic side view illustrates the relationship of elements of a prior art arrangement for driving first and second cracker rollers 10,12 of the cracker unit 6 in a forage harvester. The drive arrangement for the cracker unit 6 comprises a drive pulley 14, a tension pulley 16, first and second roller pulleys 18,20 associated with the respective first and second cracker rollers 10,12 and a guide pulley 22. A drive belt 24 is located about the rollers of the drive arrangement. A tensioning cylinder 26 is provided to allow movement of the tension pulley 16 to allow tensioning of the drive belt 24.

The drive pulley 14 drives the belt in the direction of arrow A. In this way the cracker rollers 10,12 are driven to rotate in opposite directions. The guide pulley 22 serves to direct the drive belt 24 to the drive pulley 14 after the drive belt has caused the counter-clockwise rotation (as seen in Figure 2) of the lower cracker roller 12. In Figure 2 it can be seen that the drive belt 24 has a degree of wrapping or circumferential contact area about each of the first and second roller pulleys 18,20. It is desirable that the circumferential contact area is as large as possible to ensure adequate tension in the drive belt 24 and the best torque transmission between the drive belt 24 and the roller pulleys 18,20.

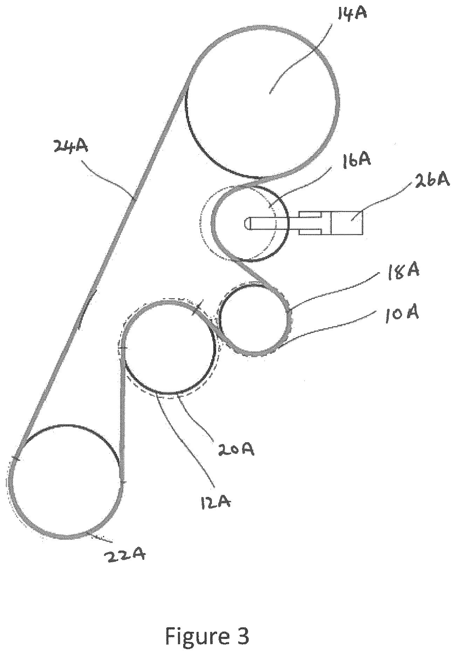

In Figure 3 a similar belt and pulley configuration is shown as in Figure 2, except that smaller diameter cracker rollers 10A, 12A with smaller diameter roller pulleys 18A, 20A have been utilised. Such a construction allows for higher rotational speeds of the cracker rollers 10A,12A. While the upper cracker roller 10A rotates about the same axis as before, the lower cracker roller 12A is mounted at a different location to ensure the proximity of the surfaces of the cracker rollers 10A, 12A as they are rotated. It will be note that the circumferential contact area, due to the change in path of the gear belt 24A, is much reduced leading to a reduced force transmission capability. This can lead to slippage of the drive belt 24A.

This problem can be addressed to some extent by using the tensioning cylinder 26 to alter the position of the tension pulley 16, for example to move the tension pulley from the solid line position in Figure 2 to the dotted line position. However, while this increases the circumferential contact area for the upper roller pulley 10A, this does not change the situation for the lower roller pulley 12A. In addition, excessive tensioning of the drive belt 24A arising from misalignment of the drive belt 24A can result in damage to the drive belt 24A, requiring an operator to shut down operation of the forage harvester while replacement of the drive belt 24A occurs.

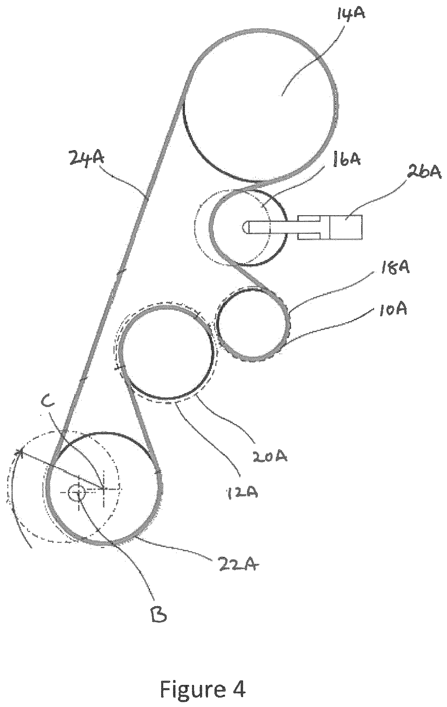

In addition to the movement of the tension pulley 16A to alter the circumferential contact area for the upper roller pulley 10A, the guide pulley 22A may be moved (to the left as shown in Figure 4) to move the guide pulley 22A from the dotted line position of Figure 4 (the position in Figures 1 and 2) to the solid line position of Figure 4. As may be seen this has increased the circumferential contact area of the drivebelt 24A with the lower cracker roller 12A.

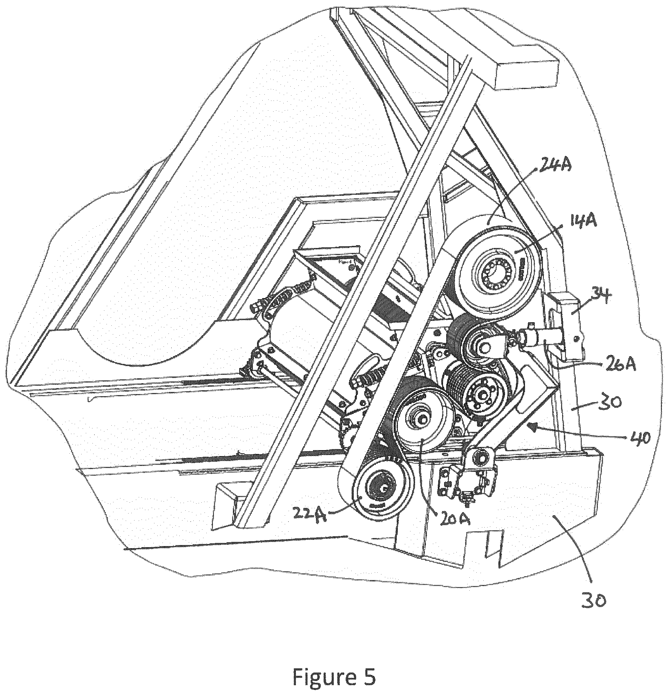

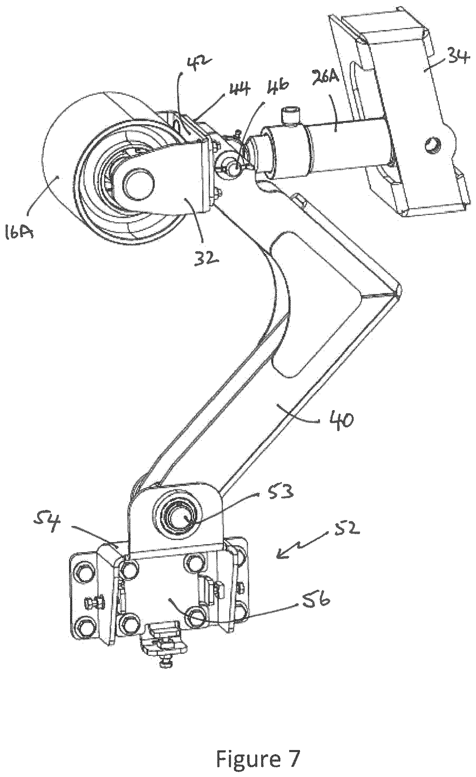

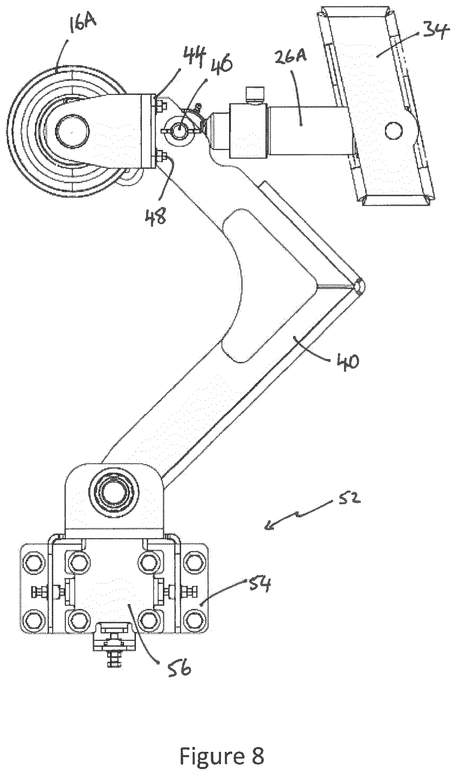

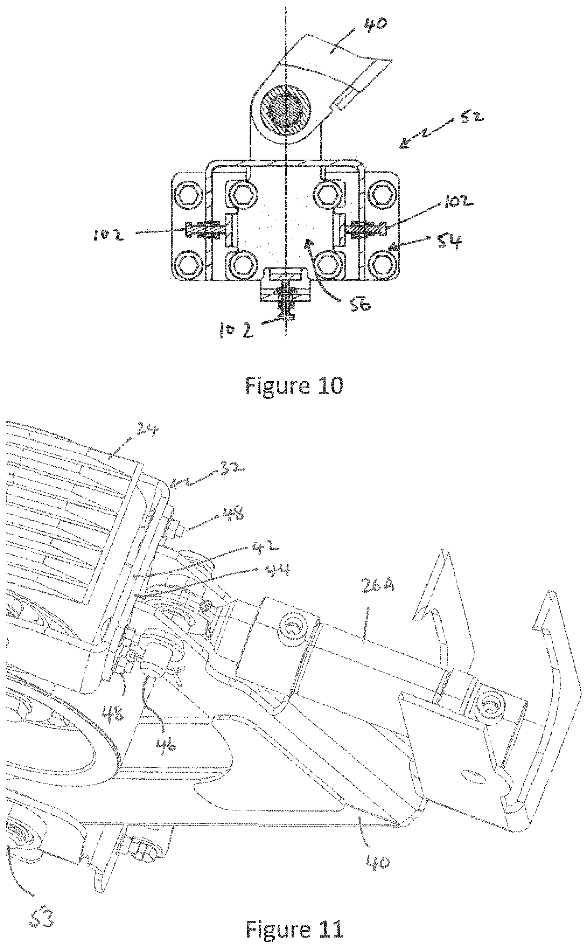

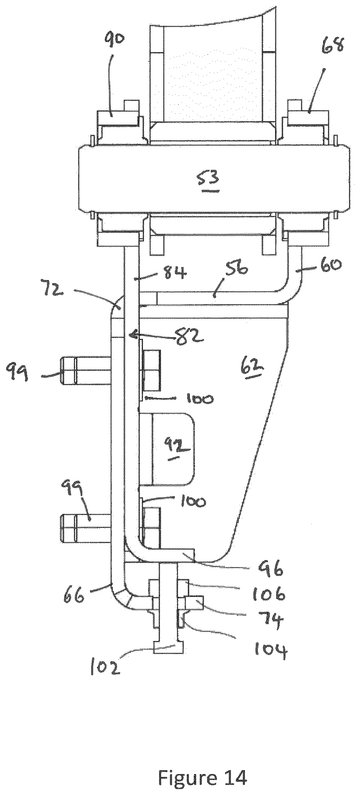

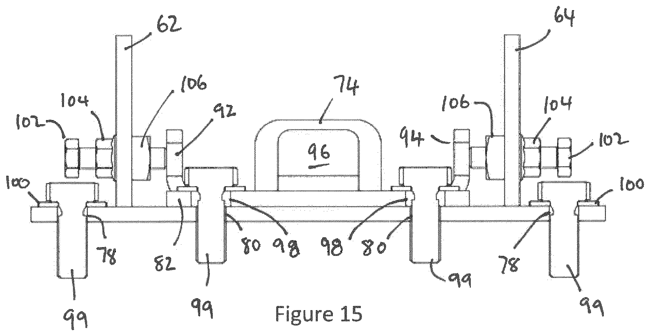

Figures 5 to 15 illustrate a solution provided in line with the present invention.

Figure 5 shows an isometric view of the cracker unit 6 and the drive arrangement for the cracker unit 6. As can be seen the cracker unit 6 and the drive arrangement for the cracker unit 6 are mounted on a frame 30 of the forage harvester.

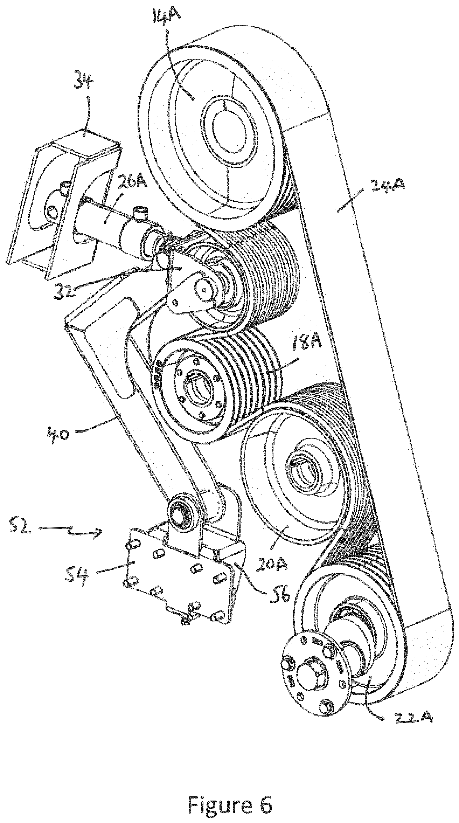

Figure 6 shows an isometric view of the drive arrangement for the cracker unit 6. For reasons of clarity, the drive pulley 14A is shown without its connection to an associated drive motor and the first and second cracker pulleys 18A, 20A are shown without their associated cracker rollers.

The tension pulley 16A can be seen to be connected to the tensioning cylinder 26A by way of a clevis arrangement 32. As may be seen in Figures 5 to 8, the tensioning cylinder 26A is pivotally mounted at a first end to a housing 34 secured to a first portion of the frame 30 of the forage harvester. A second end of the tensioning cylinder 26A is connected in the region of a crossbar 42 of the clevis arrangement 32 to a pin 46 extending through a first end of a displaceable L-shaped support 40. The side of the clevis arrangement supports an axle about which the tension pulley 16A may rotate.

The first end of the L-shaped support 40 is provided with a cross plate 44 fixedly connected to the crossbar 42 of the clevis arrangement 32. The cross plate 44 may be secured to the crossbar 42 in any suitable manner, such as by headed fasteners such as bolts 48.

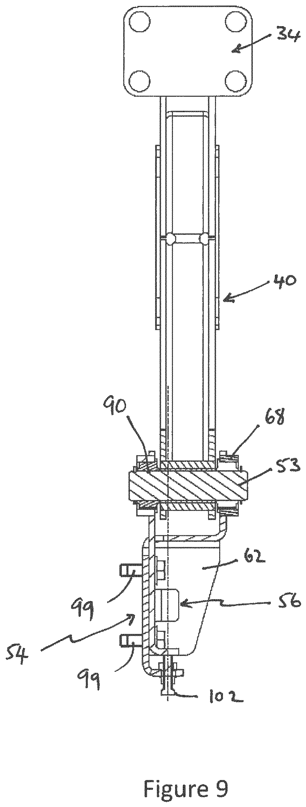

The L-shaped support 40 is pivotally connected at a second end to a bracket 52 about an axle 53 (cf Figure 9). Movement of the first end of the L-shaped support 40 when the tensioning cylinder is operated to adjust the position of the tension pulley will change the alignment of the L-shaped support 40 with respect to the frame and the other pulleys.

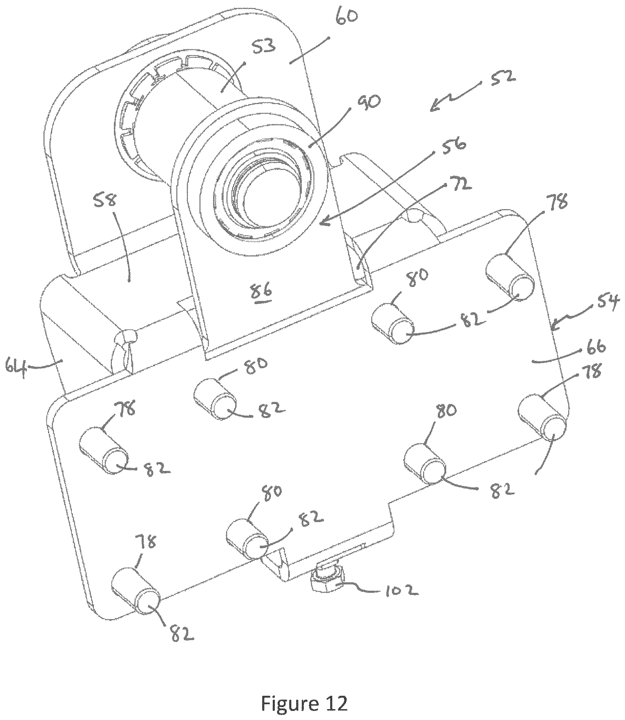

As may best be seen in Figures 12 to 15, the bracket 52 is in two parts 54,56. The first part 54 of the bracket 52 comprises a substantially rectangular body part 58 from which extend first, second, third and fourth flanges 60,62,64,66.

The first flange 60 extends along a first longer side of the rectangular body part and is directed orthogonally in a first direction away from the rectangular body part 58. A distal end of the first flange 60 is provided with a first end mounting 68, for example a slide bearing, for the axle 53.

The second and third flanges 62,64 each extend along a shorter edge of the rectangular body part 58 and orthogonally in a second direction, opposite the second direction, away from the rectangular body part 58. Each of the second and third flanges 62,64 are provided with an opening. Conveniently, each of these openings is arranged an equal distance from the main part of the fourth flange 66 and are aligned with one another. Conveniently, these openings may be provided with an internal thread.

The fourth flange 66 is substantially T shaped. A main part of the fourth flange 66 extends from the other longer edge of the rectangular body part 58 and extends beyond the longer edge at each end of the longer rectangular body part 58. The fourth flange 66 also extends orthogonally in the second direction away from the rectangular body part 58. A side edge of each of the second and third flanges 62,64 abuts the main part of the fourth flange 66. Conveniently, the side edges of each of the second and third flanges 62,64 are welded to the main part of the fourth flange 66.

An opening or window 72 is provided in the first part of the bracket between the rectangular body part 58 and the fourth flange 66. A minor part 74 of the fourth flange 66, forming the central limb of the T-shaped fourth flange 66, extends centrally from a distal edge of the main part of the fourth flange 66. The minor part 74 extends orthogonally from the fourth flange 66, substantially parallel to the rectangular body part 58. The minor part 74 includes an opening 76.

Conveniently the first part 54 of the bracket 52 is formed of suitable sheet steel laser cut to shape and subsequently bent into the desired shape before welding of the side edges of each of the second and third flanges 62,64 are welded to the main part of the fourth flange 66.

The lateral regions of the fourth flange 66 outside of the second and third flanges 62,64 are provided with threaded through bores 78. Further through bores 80 are provided in the fourth flange 66 in the region between the second and third flanges 64,66. These through bores 78,80 align with similar threaded through bores in the frame 30.

The second part 56 of the bracket 52 comprises a substantially rectangular main body portion 82 from which extend four flanges 84,92,94,96. A first flange 84 extends linearly away from a longer edge of the rectangular main body portion 82. In use, the first flange 84 forms a tongue suitably sized to extend through the window 72 in the first part of the bracket. A distal end of the first flange 84 is provided with a second end mounting 90, for example a slide bearing, for the axle 53.

It can be seen that the axle 53 has an axis of rotation defined by the location of the first and second end mountings 68,90.

Second, third and fourth flanges 92,94,96 extend orthogonally away from each of the remaining edges of the rectangular main body portion 82. In use the second flange 92 of the second part of the bracket is substantially parallel to the second flange 62 of the first part of the bracket, the third flange 94 of the second part of the bracket is substantially parallel to the third flange 64 of the first part of the bracket and the fourth flange 96 of the second part of the bracket is substantially parallel to the minor part 74 of the fourth flange 66 of the first part of the bracket.

The rectangular main body portion 82 is also provided with a number of through bores 98. The diameter of these bores 98 is greater than the diameter of the through bores 80 extending thorough the first part 54 of the bracket 52 and the frame 30. In use threaded fasteners 99 such as bolts extend through the through bores 78,88 in the first part 54 of the bracket 52, through the through bores 98 in the second part 56 of the bracket 52 and the threaded through bores in the frame so that the first and second parts 54,56 of the bracket 52 are secured to the frame 30.

As in the illustrated embodiment, washers 100 may be provided between the heads of the threaded fasteners 99 and the adjacent part of the bracket.

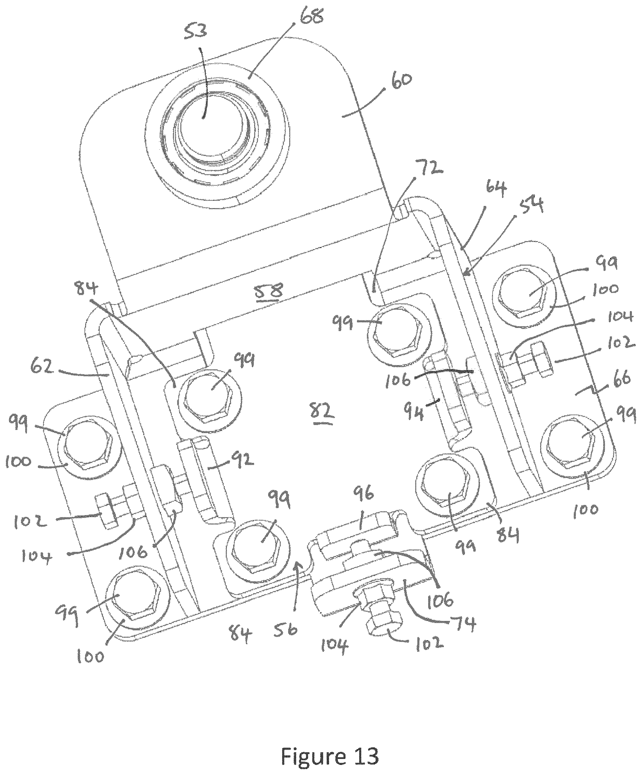

In use further threaded fasteners 102 are provided extending though the openings in each of the second and third flanges 62,64 of the first part 54 of the bracket 52 and the minor part 74 of the fourth flange 66 of the first part 54 of the bracket 52 (Figure 13). Each is structurally and functionally similar manner so only one of the fasteners 102 is described, it being understood that the other fasteners replicate the first.

A first nut 104 is located on a shank of the threaded fastener 102 and the shank passed though the flange 62,64 or minor part 74 of the first part 54 of the bracket 52 and through a second nut 106 located between the flange 62,64 or minor part 74 of the first part 54 of the bracket 52 and the flange 92,94,96 of the second part 56 of the bracket 52. Conveniently, the second nut is welded to the flange 62,64 or minor part 74 of the first part 54 of the bracket 52. The threaded fastener 102 is adjusted until a distal end of the shank abuts a face of the adjacent flange 92,94,96 of the second part of the bracket.

Before attaching the bracket 52 to the frame, the first and second parts 54,56 of the bracket 52 are arranged so that the substantially rectangular main body portion 82 of the second part 56 is held within an area bounded by the rectangular body part 58, the second and third flanges 62,64 and the minor part 74 of the first part 54 so that when affixed to the frame, the first and second end mountings 68,90 are arranged substantially horizontally. In this way the axis of rotation of the axle 53 is held substantially horizontally.

It will be understood that when attached to the frame the first end mounting 68 is held in a fixed relationship to the frame 30. Further, by adjustment of the threaded fasteners 102, the second part 56 of the bracket 52 can be adjusted upward and downward with respect to the first part 54 of the bracket 52. This allows movement of the second end mounting 90 vertically and horizontally with respect to the first end mounting 68. In this way it can be seen that the axis of rotation of the axle 53 can be moved in three dimensions about a point within the first end mounting 68. This movement is transferred to the first end of the L-shaped support 40 and so to the second end of the L-shaped support 40 and the clevis arrangement 32 supporting the tension pulley 16A. Accordingly, if on replacement of the cracker rollers, and suitable adjustment of the tension pulley 16A, the tension pulley 16A becomes misaligned, the operator can, by adjustment of the screws 102, cause the tension pulley 16A to be realigned.

It will be appreciated that by controlling these three points of contact of the second part 56 of the bracket 52 in this way a precise control of the location of the second part 56 of the bracket 52 with respect to the frame 30 can be obtained and accordingly precise adjustment of the axle 53 and so the positioning of the L-shaped support 40 in relation to the frame 30. It will be understood that this will allow an operator to adjust the positioning of the axle 53 to change the position of the second end of the tensioning cylinder 26, and so the position of the tension pulley 16A, as required when a cracker roller is changed.

Once the axle has been adjusted into the desired position, the fasteners 99 extending through both the first and second parts 54,56 of the bracket and the frame 40 may be tightened to secure the tension pulley 16A in position.

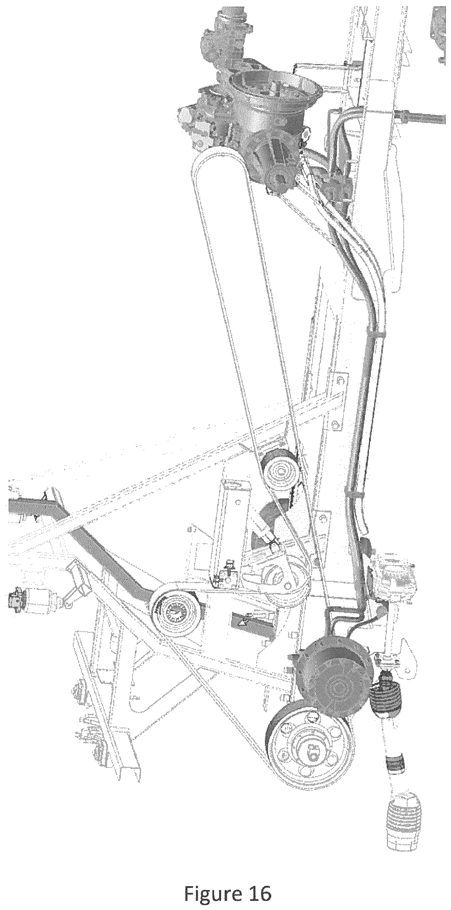

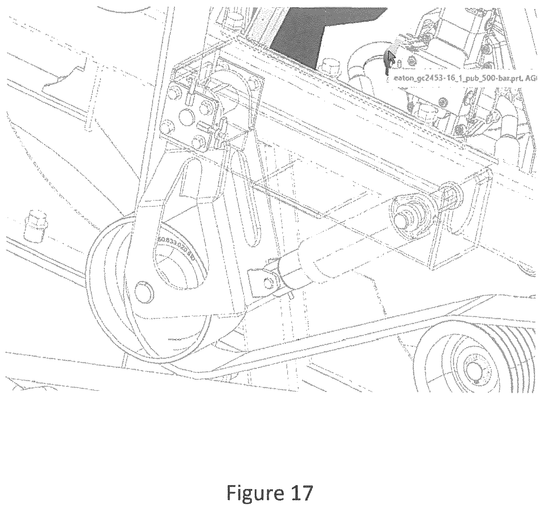

The principles of the present invention may also be applied to the main drive system for driving of the chopper drum (Figures 16 and 17). Figure 16 shows a general arrangement of a suitable drive system, including a drive pulley 114, guide pulleys 122 and a tension pulley 116. A mounting arrangement suitable for the tension pulley for use in the present invention is shown in more detail in Figure 17. A support frame 130 is attached in any suitable manner to the main frame 30 of the forage harvester.

The support frame 130 is provided at a first end with a mounting for a first end of a tensioning cylinder 126. A second end of the tensioning cylinder 126 is secured to a second end of a pivoting support 140. Conveniently, the second end of the tensioning cylinder 126 is secured by a pin 146 extending between parallel plates 132 secured to a central portion of the pivoting support 140.

The pivoting support includes side flanges extending orthogonally from the central portion of the pivoting support 140. The side flanges at the second end of the pivoting support 140 are provided with mountings to provide support for an axle about which the tension pulley 16A may rotate. The tension pulley can be seen to partially housed within the second end of the pivoting support 140.

The pivoting support 140 is pivotally connected at a second end to a second end of the support frame 140 about an axle 53. The second end of the support frame 130 is provided with first and second end mountings 168,190. At the second end of the pivoting support, the side flanges are mounted to the axle 53 between the first and second end mountings 168,190. The second end mounting 190 is conveniently secured to an outside of the support frame 130.

At the second end the support frame 130 included a horizontal tab 174 extending outward from an upper surface of the support frame 130 and a vertical tab 164 extending from the outer side wall of the support frame. The horizontal tab 174 and the vertical tab 164 may be formed in any suitable manner. Each of the horizontal tab 174 and the vertical tab 164 are provided with a threaded opening.

The first end mounting 168 is fixedly secured to an inner wall of the support frame 140, or alternatively directly to the frame 30, in any suitable fashion.

The second end mounting 190 shown in the illustrated embodiment is substantially square. The second end mounting 190 is provided towards each of its corners with openings through which, in use threaded headed fasteners 199 extend. The support frame is provided with larger openings through which the fasteners 199 also extend to engage with nuts.

In an upper region the second end mounting 190 is provided with a vertically extending section 175 having an internal thread. One side of the second end mounting 190 is provided with a horizontally extending section 165 having an internal thread. In the illustrated embodiment, the horizontally extending section 165 extends from the first end of the support frame 130 toward the second end of the support frame 130. The horizontally extending section 165 and the vertically extending section 175 are secured to the outer face of the second end mounting 190 is any suitable fashion, for example by welding.

In use, threaded fasteners 102 extend through the respective tabs 164,174 the threaded and into the internal threads of the associated horizontally and vertically extending sections 165,175. With the thread fasteners 199 loosened, the position of the second end housing 190 with respect to the support frame 130 (and the frame 30) can be adjusted horizontally and vertically. In this way the axis of the axle 153 can be adjusted about a point defined within the first end mounting 168. Movement of the axle 153 in this way allows the position of the tension pully 116 to be varied.

Once the tension pulley 116 is in the required position, the threaded fasteners 199 can be tightened against their respective nuts to secure the second end mounting in position.

From reading the present disclosure, other modifications will be apparent to persons skilled in the art. Such modifications may involve other features which are already known in the field of forage harvesters and component parts thereof and which may be used instead of or in addition to features already described herein.

## Claims

1. A forage harvester comprising a frame and a drive assembly comprising a drive pulley, a tension pulley, a plurality of additional pulleys and a drive belt for drivingly connecting the pulleys, a tensioning cylinder located between a first portion of the frame and a support element for the tension pulley, the frame being provided with a mounting at a second portion of the frame and the support element for the tension pulley being located between the mounting at a first end of the support element and the tensioning cylinder at a second end of the support element, **characterised in that** the mounting at the first end of the support element comprises first and second elements, the first element fixedly secured to the frame and the second element releasably secured to and displaceable with respect to the first element.

2. A forage harvester according to claim 1, **characterised in that** the second element provides three abutment surfaces by which its position in relation to the first element may be adjusted.

3. A forage harvester according to claim 2, **characterised in that** two of the three abutment surfaces are spaced at 90 degrees to the third abutment surface.

4. A forage harvester according to any of claim 1 to claim 3, **characterised in that** the first element further comprises a substantially rectangular body part from which extend first, second, third and fourth flanges, the first flange being provided with the axle mounting, the second, third and fourth flanges extending at least in part orthogonally from the substantially rectangular body part, the orthogonally extending portions of the second, third and fourth flanges each being provided with an opening and a window located between the substantially rectangular body part and the fourth flange.

5. A forage harvester according to any of claim 1 to claim 4, **characterised in that** the second element further comprises a substantially rectangular body part from which extend first, second, third and fourth flanges, the first flange being provided with the axle mounting, the second, third and fourth flanges extending at least in part orthogonally from the substantially rectangular body part to provide each of the three abutment surfaces.

6. A forage harvester according to claim 4 or claim 5, **characterised in that** the mounting further comprises adjustable fasteners extending though the openings in the first element and abutting the abutment surfaces of the second element.

7. A forage harvester according to claim 1, **characterised in that** the second element provides first and second adjustment apparatus by which its position in relation to the frame may be adjusted.

8. A forage harvester according to claim 7, **characterised in that** first and second adjustment apparatus are oriented at 90 degrees to one another.

9. A forage harvester according to claim 7 or claim 8, **characterised in that** the frame further comprises first and second flanges extending outwardly to the sides of the second element, the first and second flanges being oriented at 90 degrees to one another, each of the first and second flanges being provided with an opening.

10. A forage harvester according to claim 9, **characterised in that** the second element further comprises a substantially rectangular body part provided with the first and second adjustment apparatus, the first and second adjustment apparatus incorporating respective first and second threaded openings oriented at 90 degrees to one another.

11. A forage harvester according to claim 10, **characterised in that** the mounting further comprises adjustable fasteners extending though the openings in the frame and received within the threaded openings of the second element.

12. A forage harvester according to any of claim 1 to claim 11, **characterised in that** the mounting at the second portion of the frame comprises first and second end mountings supporting an axle extending through the first end of the support element.

13. A forage harvester according to claim 12, **characterised in that** the first end mounting is fixed in relation to the frame.

14. A forage harvester according to claim 12 or claim 13, **characterised in that** the second end mounting is adjustable horizontally and vertically with respect to the frame.

15. A forage harvester according to any of claim 1 to claim 14, **characterised in that** the support element comprises a clevis for supporting the tension pulley adjacent an end of the tensioning cylinder remote from the first portion of the frame.

16. A forage harvester according to any of claim 1 to claim 15, **characterised in that** the forage harvester further comprises a cracker roller assembly and the drive assembly is adapted for driving of the cracker roller assembly.

17. A forage harvester according to any of claim 1 to claim 16, **characterised in that** the forage harvester further comprises a chopper drum and the drive assembly is adapted for driving of the chopper drum.
